# EUROPEAN PATENT SPECIFICATION

(11) **EP 1 691 278 B1**
(45) Date of publication and mention of the grant of the patent: **07.05.2008**
(21) Application number: 05101005.6
(22) Date of filing: 11.02.2005
(51) Int. Cl.: G06F 9/44

(54) **Method and computer system for editing documents**
Verfahren und Computer zur Aufbereitung von Dokumenten
Méthode et ordinateur pour l'édition de documents

(43) Date of publication of application: 16.08.2006
(73) Proprietor: SAP AG, 69190 Walldorf (DE)
(72) Inventor: Schattka, Karin, 69231, Rauenberg (DE); Spriestersbach, Axel, 76131, Karlsruhe (DE); Ziegert, Thomas, 64295, Darmstadt (DE)
(74) Representative: Schiuma, Daniele Wolfgang

(56) References cited:
- US-A1- 2003 067 489
- MARIE-ANTOINETTE ACHERITEGUY: "WAP GENERATION DE PAGES WML" INTERNET DOCUMENT, [Online] 1999, - 2000 XP002344662 Retrieved from the Internet: URL:www.hec.unil.ch/cms_inforge/Antoinette Acheriteguy.pdf>
- MACROMEDIA: 'Homesite 5.0' PROGRAM February 2002, -& "Homesite 5 browse window" SCREENSHOT, 20 September 2005 (2005-09-20), XP002346457
- 'Print preview function as included in usual office programs' COMPUTER PROGRAM 10 February 2005,

## Description

### Field of the Invention

The present invention generally relates to electronic data processing, and more particularly, relates to methods, computer program products and systems for editing documents in an integrated development environment

### Background of the Invention

For the development of software applications so called integrated development environments (IDE) can be used by software developers. A well known example of an open extensible IDE is the Eclipse tool platform, which is presented on the web site www.eclipse.org. A further example is SAP AG's IDE in the SAP Netweaver Developer Studio, which is part of the SAP Netweaver product. When using such state of the art IDEs for developing applications for multiple mobile devices a developer is forced to develop and test an application for various screen resolutions. This is because each mobile device typically has a different screen resolution depending on the mobile device's display. Usually, a developer creates a graphical application user interface (UI) for an application, which is tailored to a specific device. This task is repeated for each device which is intended to run the application. For example, by using a visual toolkit such as the View Designer in the SAP Netweaver Developer Studio, a developer can design and test the application for different devices or device classes, such as personal digital assistants (PDAs) or mobile phones. Typically a corresponding device emulator is used to preview of the application layout as it will look like on the display of the corresponding device. However, during the first development phase the developer has no knowledge if the application will fit the device and it is likely that the application will not fit. Further, executing the application on a set of devices or device emulators causes a lot of efforts in installing the emulators and/or getting the devices. Further, once the developer can see the test result on a device/emulator, he/she cannot directly change the visual representation on the device or emulator itself. Therefore, the developer needs to use the visual toolkit again.

Browser Resize is a part of the WebDeveloper Plug-in that is available for the Mozilla/Firefox Browser. It allows resizing the browser to any kind of screen resolution. This helps a web designer to design his application for various screen sizes. However, a developer can not instantly see or access and change content in the browser window.

A device emulator emulates a browser or a device including the browser that is installed on the device. They can be used for previewing the application as well. However, emulators face similar challenges as the Brower Resize. A developer cannot see hidden content (UI content outside the visible portion of the display) and the developer cannot directly access and edit the hidden content.

### Summary of the Invention

In one aspect of the invention a computer system for developing a software application includes an editor unit configured to define a layout of a graphical user interface of the software application. For example, the software application can be a computer program that is able to perform specific functions, such as creating a customer order or generating a report. The computer system further includes a view zone generator unit configured to determine the resolution of a device display being used for displaying the layout. The view zone generator unit then calculates a view zone that is adjusted to the determined resolution, wherein the view zone corresponds to the visible portion of the layout on the device display. Finally the calculated view zone is outlined in the editor unit. By using the inventive computer system an application developer can adjust the layout of a software application for various devices or device classes through the user interface of the editor unit because editing of layout elements is supported in the same editor UI where the resolution restrictions of the respective device display are made visible for the developer. For the developer it becomes immediately apparent, which layout elements of an application layout are visible on which device. By using standard editing functions, the layout can be optimised for one or more devices or device classes.

Further aspects of the invention are a computer program product according to the independent claim 10 that is run by the computer system and a computer implemented method according to independent claim 7.

Alternative embodiments of the invention can be implemented by further including a device selector unit, which is configured to receive an instruction to select a device or a device class associated with the device display being used for displaying the layout. A device repository may store information about the resolution of device displays for a plurality of devices or device classes. The view zone generator unit can retrieve resolution values from the device repository in accordance with the selections of the device selector unit. This method may be repeated multiple times for a plurality of devices. The view zone generator unit can then outline the calculated view zones for all selected devices or device classes in the same layout view. The developer can now adjust the layout to all selected devices or device classes in one shot.

The aspects of the invention will be realized and attained by means of the elements and combinations particularly pointed out in the appended claims. It is to be understood that both the foregoing general description and the following detailed description are exemplary and explanatory only and are not restrictive of the invention as described.

### Brief Description of the Drawings

FIG. 1 is a simplified block diagram of a computer system for software application development according to one embodiment of the invention;
FIG. 2 illustrates a layout editor user interface according to one embodiment of the invention;
FIG. 3 is a simplified flow chart of a computer implemented method for developing software applications according to an embodiment of the invention;
FIG. 4 is a simplified block diagram of a further embodiment of the computer system;
FIG. 5 is a further embodiment of the layout editor user interface; and
FIG. 6 is a portion of an IDE user interface according to an embodiment of the invention.

### Detailed Description of the Invention

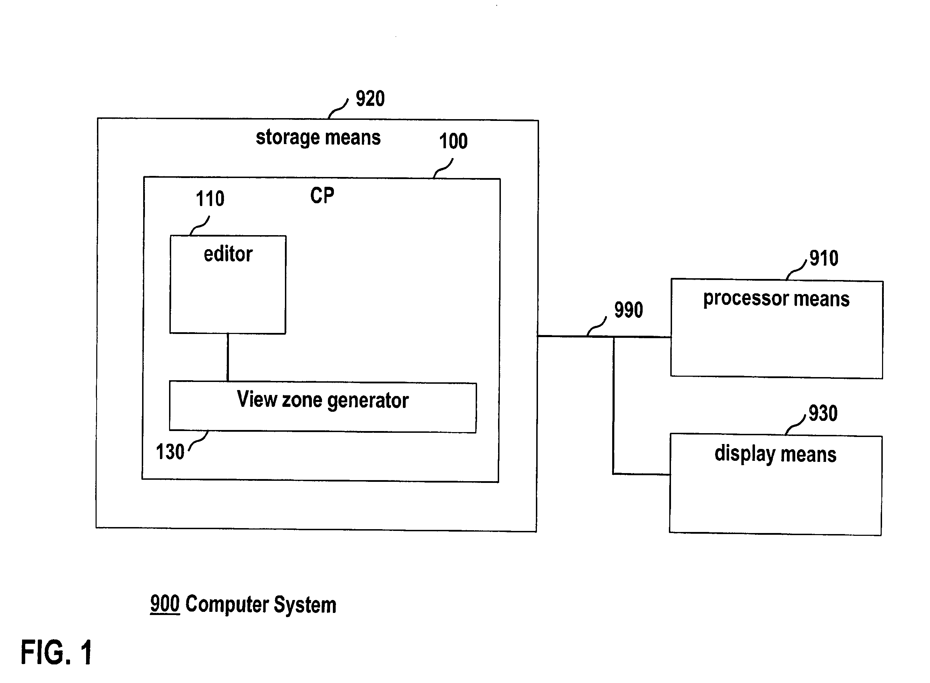

FIG. 1 is a simplified block diagram of a computer system 900 for software application development according to one embodiment of the invention. The computer system includes conventional processor means 910, display means 930 and storage means 920, which can communicate with each other. For example, the communication can occur over a conventional bus 990. The display means (e.g., a monitor) are configured to provide a graphical user interface to a user of the computer system 900. The processor means 910 are configured to process instructions that are stored in the storage means (e.g., a memory of the computer system).

The storage means 910 can store a computer program 100 that implements at least an editor unit 110 and a view zone generator unit 130, which are interfaced to each other.

The editor unit 110 is configured to define a layout 300 of a graphical user interface of a software application. For example, integrated development environments (IDEs), such as Eclipse, WebSphere Studio Application Developer from IBM or NetWeaver Studio from SAP AG include such editor units. The editor unit 110 supports standard visual editing functions, such as, for example, inserting, moving or deleting of layout components in a graphical layout view. The editor may also support editing functions, such as drag & drop or drag & relate.

The view zone generator unit 130 is configured to determine the resolution of a device display being used for displaying the layout 300. That is, typically a software application is developed for a specific user device. The various devices can have different display sizes. For example, a laptop computer has a much larger display than a personal digital assistant (PDA) or a mobile phone. Therefore, it may be convenient to have different application layouts for a software application, where each layout is tailored to the display of a specific device or device class. A device class in this context corresponds to a group of devices that all have the same display resolution. The layout may be tailored to the device by a developer or automatically generated by a tool, such as the Consensus toolset, which is described on the Consensus project site http://www.consensus-online.org. Dependent on the used device, the user sees an appropriate layout of the software application. For example, when the user uses an IBM Think pad, the resolution of the device display may be 1024 x 768 pixels, whereas when using a PDA, such as, for example, a Palm Pilot, the resolution of the device display may be limited to 480 x 320 pixels. For example, an application developer can provide the resolution to the editor unit or view zone generator unit. Alternatively, the display resolution values for various devices or device classes may be stored in a corresponding device repository, from where the view zone generator unit can retrieve the corresponding resolution.

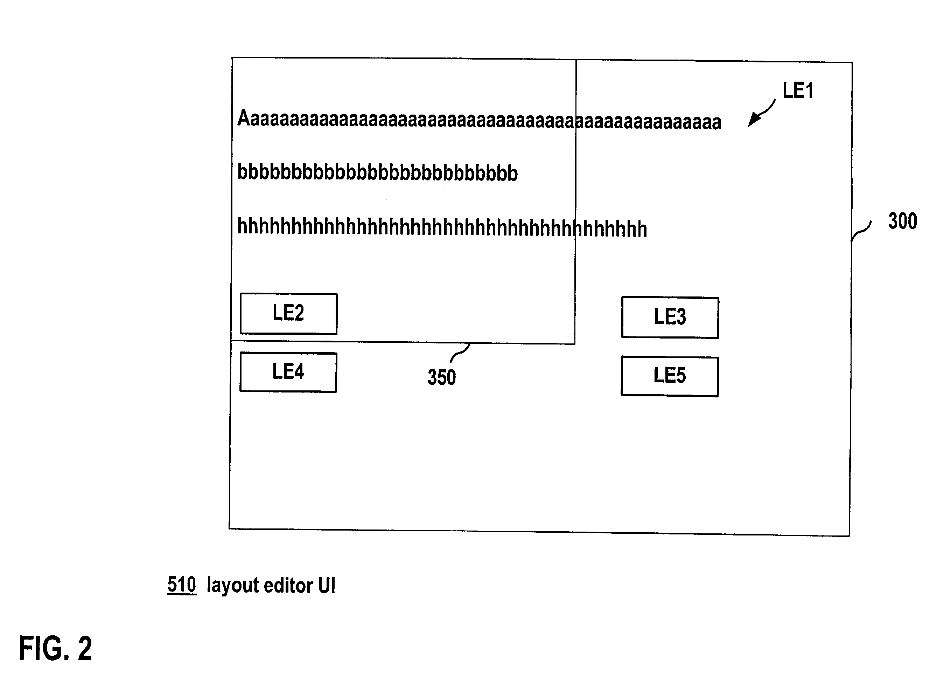

The view zone generator unit 130 then calculates a view zone 350 (cf. FIG. 2) that is adjusted to the determined resolution. The view zone 350 corresponds to the visible portion of the layout 300 (cf. FIG. 2) on the respective device display. For example, the view zone's 350 upper left pixel may correspond to the layout's 300 upper left pixel. However, the view zone's lower right pixel may be somewhere in the midst of the layout 300 dependent on the resolution of the respective device.

The view zone generator unit 130 then outlines the calculated view zone 350 in the editor unit 110. For example, the view zone can be outlined by a bold line that roughly corresponds to the shape of the respective device display (e.g., a rectangular shape). The user can now see which layout elements of the layout 300 are also visible on the respective device display and which layout elements will be hidden and only be accessible on the device display through scrolling. However, scrolling on small displays has a negative impact on the user's control of the small device. Especially a need for horizontal scrolling in an application layout is generally considered to be poor application layout design.

FIG. 2 illustrates a layout editor user interface 510 as it may be displayed on the display means 930 (cf. FIG. 1). The layout in the example includes a plurality of layout elements LE1 to LE2. For example, LE1 can include text rows (Aaaaa..., bb..., hhhh...). Layout elements LE2 to L5 may include control buttons, input fields, display fields, etc. The view zone 350 is shown as a rectangle, where the view zone's upper left pixel corresponds to the layout's 300 upper left pixel. The view zone outline can also be highlighted by using a specific colour or line style (e.g., dotted line). Any other shape of the view zone is possible dependent on the display shape of the respective device or device class. For example, the view zone my be displayed by a translucent picture of the respective device.

In the example, only layout element LE2 is completely inside the view zone 350. The text rows of layout element LE1 are at least partially outside the view zone and the layout elements LE3 to LE5 are completely out side the view zone and, therefore, not visible at all when the application layout 300 is run on a device with a display that corresponds to the view zone 350. The layout elements outside the view zone would only be accessible through scrolling for the user of the respective device.

An application developer immediately can see, which layout elements of the application will be invisible when the application is run on the respective device. The developer can then instantly modify the layout 300 in the editor unit 110 to make the layout 300 fit in with the view zone 350. This is a significant advantage over a development method where a device emulator is used to generate a device specific preview of the layout. By using the outlined view zone according to the invention, the developer always sees the total layout and can adjust it according to the respective display size.

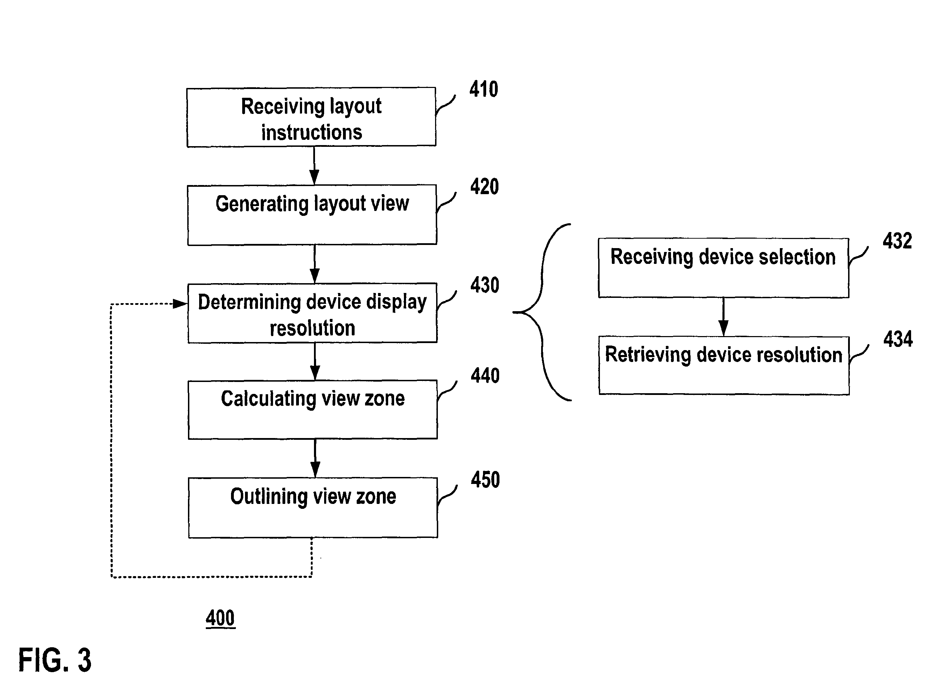

FIG. 3 is a simplified flow chart of a computer implemented method 400 for developing a software application according to an embodiment of the invention. The method 400 comprises the steps of: receiving layout instructions 410, generating layout view 420, determining device display resolution 430, calculating view zone 440, and outlining view zone 450.

In the receiving layout instructions step 410, the application developer can give layout instruction to the computer system 900 (cf. FIG. 1) by using a standard input device, such as a keyboard or mouse device. The developer defines a graphical user interface of the software application by executing the corresponding editing functions of the editor unit 110 (cf. FIG. 1). The editor unit 110 can now generate 420 a corresponding layout view according to the developer's instructions. However, the generating step 420 may also be performed after the outlining view zone step 450.

For example, in one implementation a View Designer tool which embeds the Microsoft Internet Explorer for layout visualization can be used for displaying the layout. To visualize the layout 300 (graphical user interface) a document object model (DOM) is built in memory (e.g., storage means 920) and rendered by the internet explorer. For example, HTML, XHTML or other markup languages may be used for rendering the layout 300 and Scalable Vector Graphics (SVG) may be used for rendering the view zone 350 according to respective the W3C specifications. The following coding example 1 illustrates how the namespace of VML (Vector Markup Language) is included in the head portion of a document describing the layout. VML can be used to generate view zones marked up in VML.

Coding example 1:

```
 // include Vector Markup Language
 writer.write("<html xmlns:v=\"urn:schemas-microsoft-
 com:vml\">");
 writer.write("<style>");
 writer.write("v\\:* { behavior: url(#default#VML); }");
 writer.write("</style>");
```

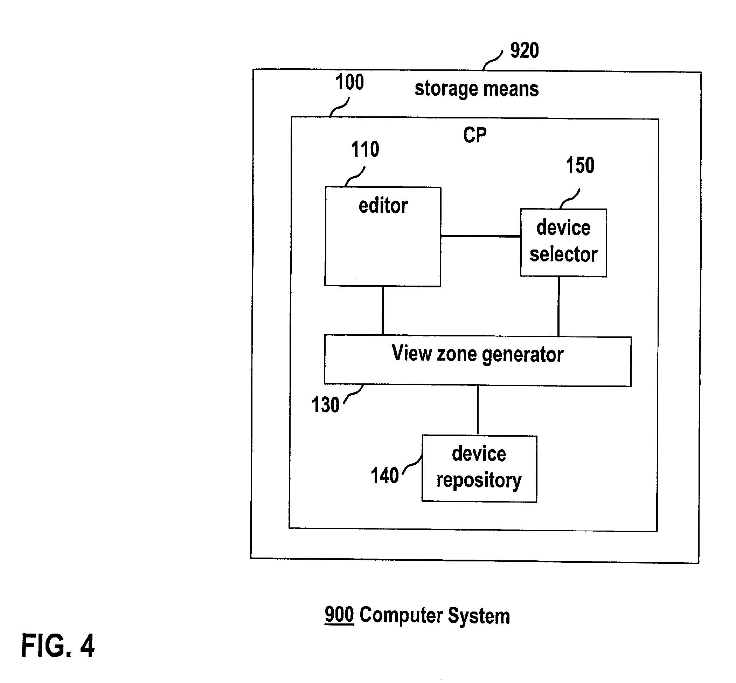

In the determining device display resolution step 430, the view zone generator unit uses a device or device class attribute to retrieve the resolution of the respective device or device class, which is to be used for displaying the layout 300. For example, the developer can assign a corresponding attribute directly to the layout. Details of the determining step 430 in an alternative embodiment of the computer system 900 are explained in detail in FIG. 4. For example, the determining step 430 may include the steps receiving 432 a selection for a device or a device class and retrieving 434 the resolution of the device display that is associated with the selected device or device class from a device repository.

The steps receiving device selection 432, retrieving device resolution 434 and calculating view zone 440 may be repeated for a plurality of devices or device classes. The outlining step 450 can outline the calculated view zones for all selected devices or device classes. The optional repetition of the described sub-process is illustrated by the dashed arrow.

In the calculating view zone step 440 the view zone generator unit calculates the view zone 350 that corresponds to the visible portion of the layout 300 on the respective device display in accordance with the determined resolution.

The following coding example 2 illustrates how a view zone for a given mobile phone (currentDevice) can be calculated. The view zone in this example has a rectangular shape.

Coding example 2:
Rectangle rect = new getRectangleForDevice(currentDevice);

In the outlining view zone step 450, the view zone is outlined in the layout view of the layout editor UI 510 (cf. FIG. 2). The following coding example 3 illustrates how the rectangular view zone for the mobile phone can be drawn as a rectangular line in the layout view.

Coding example 3:

```
 writer.write("<v:line fill=\"false\" from=\"" + (new
 Double(rect.getX())).intValue() + " " + (new
 Double(rect.getY())).intValue() + "\" to=\"" + (new
 Double(rect.getWidth())).intValue() + " " + (new
 Double(rect.getY())).intValue() + "\" strokecolor=\"red\"
 strokeweight=\"lpt\">");
 writer.write("<v:stroke dashstyle=\"2 2\" />");
 writer.write("</v:line>");
 writer.write("<v:line fill=\"false\" from=\"" + (new
 Double(rect.getX())).intValue() + " " + (new
 Double(rect.getHeight())).intValue() + "\" to=\"" + (new
 Double(rect.getWidth())).intValue() + " " + (new
 Double(rect.getHeight())).intvalue() + "\"
 strokecolor=\"red\" strokeweight=\"lpt\">");
 writer.write("<v:stroke dashstyle=\"2 2\" />")
 writer.write("</v:line>");
 writer.write("<v:line fill=\"false\" from=\"" + (new
 Double(rect.getX())).intValue() + " " + (new
 Double(rect.getY())).intvalue() + "\" to=\"" + (new
 Double(rect.getX())).intValue() + " " + (new
 Double(rect.getHeight())).intValue() + "\"
 strokecolor=\"red\" strokeweight=\"1pt\">");
 writer.write("<v:stroke dashstyle=\"2 2\" />");
 writer.write("</v:line>");
 writer.write("<v:line fill=\"false\" from=\"" + (new
 Double(rect.getWidth())).intValue() + " " + (new
 Double(rect.getY())).intValue() + "\" to=\"" + (new
 Double(rect.getWidth())).intvalue() + " " + (new
 Double(rect.getHeight())).intValue() + "\"
 strokecolor=\"red\" strokeweight=\"1pt\">");
 writer.write("<v:stroke dashstyle=\"2 2\" />");
 writer.write("</v:line>");
       }
```

The developer may switch the targeted device, i.e. using a menu or the device switch, which causes the zoning area to adjust to the new device. The zoning area may not be modified by the developer directly. The correct resolutions for various devices can be stored in a device repository.
FIG. 4 is a simplified block diagram of a further embodiment of the computer system 900. In this further embodiment the computer program 100 stored in the storage means 920 further includes a device selector unit 150 and a device repository 140.

The device selector unit 150 can be interfaced to the editor unit 110 and to the view zone generator unit 130, or, in an alternative implementation, can be an integral part of the editor unit.

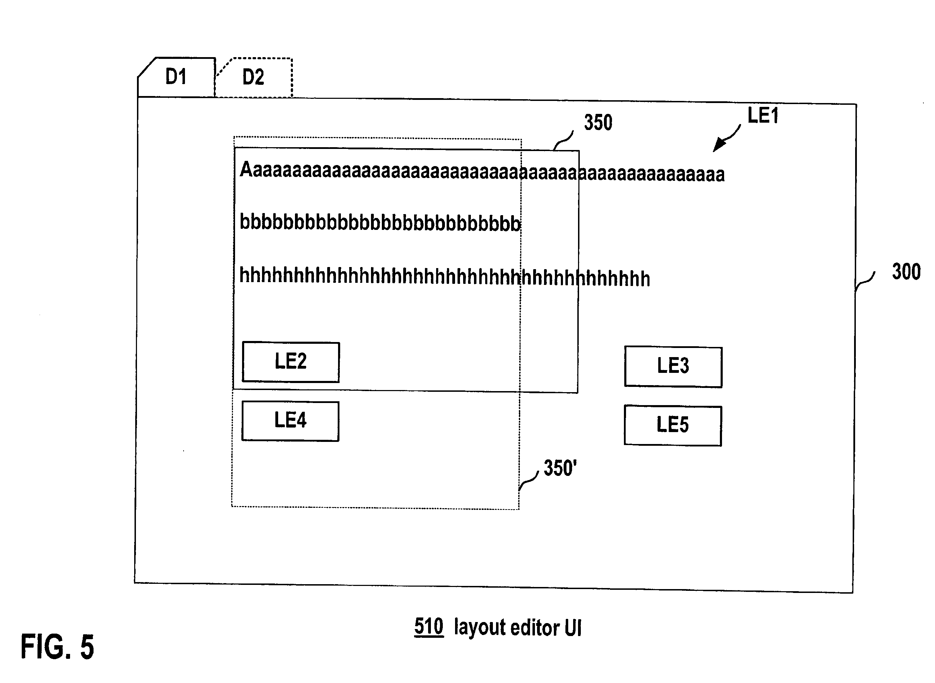

The device selector unit 150 is configured to receive an instruction to select a device or a device class associated with the device display being used for displaying the layout 300. For example, the application developer can select a device or device class from a drop down list of devices/device classes. For example, this drop down list can be called from within the layout editor UI. Once the view zone generator unit 130 has received the information about the selected device/device class it can retrieve the resolution of the device display that is associated with the selected device/device class from the device repository 140. For example, the device repository can be implemented as an assignment table in a relational database, where for each device or device class a corresponding data record stores the display resolution of the device/device class. The information may also be stored in a structured document, such as an extensible markup language (XML) file or in any other appropriate data structure. The device repository can be stored in any storage means of the computer system 900 or can even be remotely stored in storage means that are accessible by the computer system 900. FIG. 5 shows a further embodiment of the layout editor user interface 510 in combination with the further embodiment of the computer system 900 as described under FIG. 4. In this embodiment the device selector unit 150 is visualized through a plurality of tabs D1, D2, where each tab corresponds to a device or device class. Other implementations, such as a group of radio buttons or a tree control can be implemented by those skilled in the art as visualizations of the device selector unit 150.

In case the developer selects the device/device class D1, e.g., by selecting the corresponding tab, the view zone generator retrieves the resolution information for D1 from the device repository and finally outlines the view zone 350.

In case the developer selects D2, then the view zone generator retrieves the resolution information for D2 from the device repository and finally outlines the further view zone 350', which is illustrated by a dotted line.

The developer can easily "switch" through the various view zone outlines and verify, whether the layout 300 as defined can be displayed on all relevant devices/device classes.

In an alternative implementation the developer can select a plurality of devices/device classes at the same time (e.g., a subset of devices/device classes that are most relevant for running the layout) and the view zone generator unit outlines the corresponding view zones all at once in the layout editor user interface 510. To distinguish between the various devices/device classes, the different view zones may be outlined by using different colours or line styles. In this implementation, the developer can adjust the layout for all devices simultaneously by placing the relevant layout elements in the cross section of all outlined view zones.

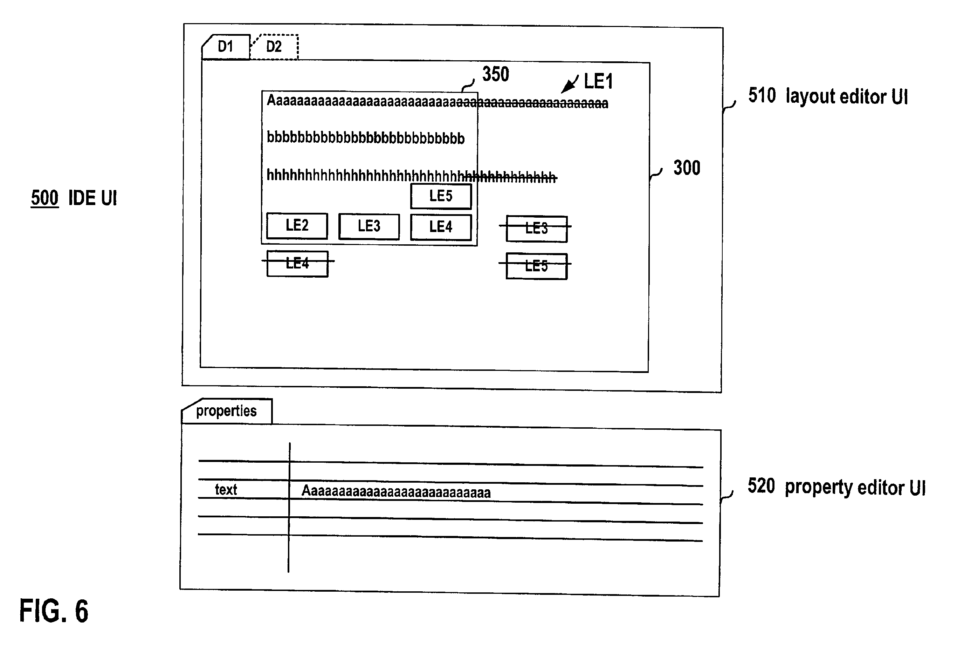

FIG. 6 shows a portion of an IDE user interface 500 according to an embodiment of the invention. The IDE UI 500 includes the layout editor UI 510 and a property editor UI 520. The property editor UI 520 can be used by a developer to modify properties of layout elements that are selected in the layout editor UI 510.

In the example, the text property of the layout element LE1 is modified by deleting the text portions that exceed the outline of view zone 350. The deleted text portions are illustrated by being crossed out.

Further the layout elements LE3 to LE5 have all been moved to a new position within the view zone 350 to become visible on the respective device. The original position is illustrated by the crossed out layout elements. For example, the move of the layout elements can be performed by using the drag & drop function of the layout editor 110.

Those skilled in the art can implement further embodiments of the invention by taking benefit of a broad range of functions provided by an IDE.

Embodiments of the invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program, such as the computer program described above, can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other.

## Claims

1. A computer system (900) for developing a software application, comprising:
an editor unit (110) configured to define a layout (300) of a graphical user interface of the software application; and
a view zone generator unit (130) configured
to determine the resolution of a first device display being used for displaying the layout (300);
to calculate a first view zone (350) that is adjusted to the determined resolution, wherein the first view zone (350) corresponds to the visible portion of the layout (300) on the first device display; and
to outline the first view zone (350) and a second view zone (350') in the editor unit, wherein the first view zone (350) corresponds to a first device having the first device display and the second view zone (350') corresponds to a second device and wherein a layout element (LE1, LE3, LE4, LE5) of the layout (300) is displayed at least partially in the editor unit (110) outside the first view zone (350).

2. The computer system of claim 1, wherein the editor unit (110) is a layout editor of an integrated development environment.

3. The computer system of claim 2, wherein the editor unit (110) further comprises a property editor configured to modify properties of layout elements (LE1 to LE5).

4. The computer system of any one of the previous claims, further comprising a device selector unit (150) configured to receive an instruction to select a device or a device class (D1, D2) associated with the device display being used for displaying the layout (300).

5. The computer system of any one of the previous claims, further comprising a device repository (140) storing information about the resolution of device displays for a plurality of devices or device classes (D1, D2).

6. The computer system of claim 5 wherein the view zone generator unit (130) is configured to use a resolution value that is stored in the device repository (140) and that corresponds to the device display of a device or device class (D1, D2) selected by the device selector unit (150).

7. A computer implemented method (400) for developing a software application, comprising the steps of:
receiving (410) instructions that define a layout (300) of a graphical user interface of the software application;
generating (420) a layout view of the layout (300) according to the instructions;
determining (430) the resolution of a first device display being used for displaying the layout (300);
calculating (440) a first view zone (350) that is adjusted to the determined resolution, wherein the first view zone (350) corresponds to the visible portion of the layout (300) on the first device display; and
outlining (450) the first view zone (350) and a second view zone (350') in the editor unit, wherein the first view zone (350) corresponds to a first device having the first device display and the second view zone (350') corresponds to a second device and wherein a layout element (LE1, LE3, LE4, LE5) of the layout (300) is displayed at least partially in the layout view outside the first view zone (350).

8. The method of claim 7, wherein the determining step (430) comprises:
receiving (432) a selection for a device or a device class (D1, D2); and
retrieving (434) the resolution of the device display that is associated with the selected device or device class (D1, D2) from a device repository (140).

9. The method of claim 8, wherein the steps
receiving (432) a selection, retrieving (434) the resolution and calculating (440) a view zone are repeated for a plurality of devices or device classes (D1, D2); and wherein
the outlining (450) step outlines the calculated view zones for all selected devices or device classes (D1, D2) in the same layout view.

10. A computer program product (100) for developing a software application, comprising a plurality of instructions that when loaded into a storage means (920) of a computer system (900) causes processor means (910) of the computer system (900) to execute the steps according to any one of the claims 7 to 9.

## Patentansprüche

1. Computersystem (900) zum Entwickeln einer Softwareanwendung, umfassend:
eine Editor- bzw. Herausgebereinheit 110), die konfiguriert ist, um ein Layout (300)
eines graphischen Benutzer-Interface der Softwareanwendung zu definieren; und
eine Sichtzonen-Generatoreinheit (130), die konfiguriert ist, um die Auflösung einer Anzeige einer ersten Vorrichtung zu bestimmen, die verwendet ist, um das Layout (300) anzuzeigen;
um eine erste Betrachtungs- bzw. Sichtzone (350) zu berechnen, welche auf die bestimmte Auflösung eingestellt ist, wobei die erste Sichtzone (350) dem sichtbaren Abschnitt des Layouts (300) auf der Anzeige der ersten Vorrichtung entspricht; und
um die erste Sichtzone (350) und eine zweite Sichtzone (350') in der Editoreinheit zu entwerfen bzw. darzustellen, wobei die erste Sichtzone (350) einer ersten Vorrichtung entspricht, die die Anzeige der ersten Vorrichtung aufweist, und die zweite Sichtzone (350') einer zweiten Vorrichtung entspricht und wobei ein Layoutelement (LE1, LE3, LE4, LE5) des Layouts (300) wenigstens teilweise in der Editoreinheit (110) außerhalb der ersten Sichtzone (350) angezeigt ist.

2. Computersystem nach Anspruch 1, wobei die Editoreinheit (110) ein Layouteditor einer integrierten Entwicklungsumgebung ist.

3. Computersystem nach Anspruch 2, wobei die Editoreinheit (110) weiterhin einen Eigenschaftseditor umfaßt, der konfiguriert ist, um Eigenschaften von Layoutelementen (LE1 bis LE5) zu modifizieren.

4. Computersystem nach einem der vorhergehenden Ansprüche, weiterhin umfassend eine Vorrichtungsauswahleinheit (150), die konfiguriert ist, um eine Instruktion bzw. Anweisung zu empfangen, um eine Vorrichtung oder eine Vorrichtungsklasse (D1, D2) auszuwählen, die mit der Vorrichtungsanzeige assoziiert ist, die für ein Anzeigen bzw. Darstellen des Layouts (300) verwendet ist.

5. Computersystem nach einem der vorhergehenden Ansprüche, weiterhin umfassend einen Vorrichtungsspeicher (140), der Information betreffend die Auflösung der Vorrichtungsanzeigen für eine Mehrzahl von Vorrichtungen oder Vorrichtungsklassen (D1, D2) speichert.

6. Computersystem nach Anspruch 5, wobei die Sichtzonen-Generatoreinheit (130) konfiguriert ist, um einen Auflösungswert zu verwenden, welcher in dem Vorrichtungsspeicher (140) gespeichert ist und welcher mit der Vorrichtungsanzeige einer Vorrichtung oder Vorrichtungsklasse (D1, D2) übereinstimmt, welche durch die Vorrichtungsauswahleinheit (150) gewählt ist.

7. Computerimplementiertes Verfahren (400) zum Entwickeln einer Softwareanwendung, umfassend die Schritte:
Empfangen (410) von Instruktionen bzw. Anweisungen, welche ein Layout (300) eines graphischen Benutzer-Interface der Softwareanwendung definieren;
Generieren bzw. Erzeugen (420) einer Layoutansicht des Layouts (300) gemäß den Instruktionen;
Bestimmen (430) der Auflösung einer Anzeige einer ersten Vorrichtung, die zum Anzeigen bzw. Darstellen des Layouts (300) verwendet wird;
Berechnen (440) einer ersten Betrachtungs- bzw. Sichtzone (350), welche auf die bestimmte Auflösung eingestellt wird, wobei die erste Sichtzone (350) dem sichtbaren Abschnitt des Layouts (300) auf der Anzeige der ersten Vorrichtung entspricht; und
Entwerfen bzw. Konstruieren (450) der ersten Sichtzone (350) und einer zweiten Sichtzone (350') in der Editoreinheit, wobei die erste Sichtzone (350) einer ersten Vorrichtung entspricht, die eine Anzeige der ersten Vorrichtung aufweist, und die zweite Sichtzone (350') einer zweiten Vorrichtung entspricht und wobei ein Layoutelement (LE1, LE3, LE4, LE5) des Layouts (300) wenigstens teilweise in der Layoutansicht außerhalb der ersten Sichtzone (350) angezeigt bzw. dargestellt wird.

8. Verfahren nach Anspruch 7, wobei der Bestimmungsschritt (430) umfaßt:
Empfangen (432) einer Auswahl für eine Vorrichtung oder eine Vorrichtungsklasse (D1, D2); und
Entnehmen (434) der Auflösung der Vorrichtungsanzeige, welche mit der gewählten Vorrichtung oder der Vorrichtungsklasse (D1, D2) assoziiert wird, von einem Vorrichtungsspeicher (140).

9. Verfahren nach Anspruch 8, wobei die Schritte
Empfangen (432) einer Auswahl, Entnehmen (434) der Auslösung und Berechnen (440) einer Sichtzone für eine Mehrzahl von Vorrichtungen oder Vorrichtungsklassen (D1, D2) wiederholt werden; und wobei
der Schritt eines Entwerfens (450) die berechneten Sichtzonen für alle gewählten Vorrichtungen oder Vorrichtungsklassen (D1, D2) in derselben Layoutansicht ausgibt.

10. Computerprogrammprodukt (100) zum Entwickeln einer Softwareanwendung, umfassend eine Mehrzahl von Instruktionen bzw. Anweisungen, welche, wenn sie in Speichermittel (920) eines Computersystems (900) geladen sind, Prozessormittel (910) des Computersystems (900) veranlassen, die Schritte gemäß irgendeinem der Ansprüche 7 bis 9 auszuführen.

## Revendications

1. Système informatique (900) pour développer une application logicielle, comportant :
une unité d'édition (110) configurée pour définir une disposition (300) d'une interface graphique utilisateur de l'application logicielle ; et
une unité de génération de zone de visualisation (130) configurée
pour déterminer la résolution d'un premier affichage de dispositif utilisé pour afficher la disposition (300) ;
pour calculer une première zone de visualisation (350) qui est réglée à la résolution déterminée, dans lequel la première zone de visualisation (350) correspond à la partie visible de la disposition (300) sur le premier affichage de dispositif ; et
' pour présenter la première zone de visualisation (350) et une seconde zone de visualisation (350') dans l'unité d'édition, dans lequel la première zone de visualisation (350) correspond à un premier dispositif ayant le premier affichage de dispositif et la seconde zone de visualisation (350') correspond à un second dispositif et dans lequel un élément de disposition (LE1, LE3, LE4, LE5) de la disposition (300) est affiché au moins partiellement dans l'unité d'édition (110) à l'extérieur de la première zone de visualisation (350).

2. Système informatique selon la revendication 1, dans lequel l'unité d'édition (110) est un éditeur de disposition d'un environnement de développement intégré.

3. Système informatique selon la revendication 2, dans lequel l'unité d'édition (110) comporte de plus un éditeur de propriétés configuré pour modifier des propriétés d'éléments de disposition (LE1 à LE5).

4. Système informatique selon l'une quelconque des revendications précédentes, comportant de plus une unité de sélection de dispositif (150) configurée pour recevoir une instruction pour sélectionner un dispositif, ou une classe de dispositif (D1, D2), associé à l'affichage de dispositif utilisé pour afficher la disposition (300).

5. Système informatique selon l'une quelconque des revendications précédentes, comportant de plus un magasin de dispositifs (140) stockant des informations concernant la résolution d'affichages de dispositifs pour une pluralité de dispositifs ou de classes de dispositif (D1, D2).

6. Système informatique selon la revendication 5, dans lequel l'unité de génération de zone de visualisation (130) est configurée pour utiliser une valeur de résolution qui est stockée dans le magasin de dispositifs (140) et qui correspond à l'affichage de dispositif d'un dispositif, ou d'une classe de dispositif (D1, D2), sélectionné par l'unité de sélection de dispositif (150).

7. Procédé implémenté par ordinateur (400) pour développer une application logicielle, comportant les étapes de :
réception (410) d'instructions qui définissent une disposition (300) d'une interface graphique utilisateur de l'application logicielle ;
génération (420) d'une vue de disposition de la disposition (300) conformément aux instructions ;
détermination (430) de la résolution d'un premier affichage de dispositif utilisé pour afficher la disposition (300) ;
calcul (440) d'une première zone de visualisation (350) qui est réglée à la résolution déterminée, dans lequel la première zone de visualisation (350) correspond à la partie visible de la disposition (300) sur le premier affichage de dispositif ; et
présentation (450) de la première zone de visualisation (350) et d'une seconde zone de visualisation (350') dans l'unité d'édition, dans lequel la première zone de visualisation (350) correspond à un premier dispositif ayant le premier affichage de dispositif et la seconde zone de visualisation (350') correspond à un second dispositif et dans lequel un élément de disposition (LE1, LE3, LE4, LE5) de la disposition (300) est affiché au moins partiellement dans la vue de disposition à l'extérieur de la première zone de visualisation (350).

8. Procédé selon la revendication 7, dans lequel l'étape de détermination (430) comporte :
la réception (432) d'une sélection d'un dispositif ou d'une classe de dispositif (D1, D2) ; et
la récupération (434) de la résolution de l'affichage de dispositif qui est associée au dispositif, ou à la classe de dispositif (D1, D2), sélectionné dans un magasin de dispositifs (140).

9. Procédé selon la revendication 8, dans lequel les étapes de
réception (432) d'une sélection, récupération (434) de la résolution et de calcul (440) d'une zone de visualisation sont répétées pour une pluralité de dispositifs ou de classes de dispositif (D1, D2), et dans lequel
l'étape de présentation (450) présente les zones de visualisation calculées pour tous les dispositifs ou classes de dispositif sélectionnés (D1, D2) dans la même vue de disposition.

10. Produit de programme informatique (100) pour développer une application logicielle, comportant une pluralité d'instructions qui, lorsque chargées dans des moyens de stockage (920) d'un système informatique (900), amènent des moyens de traitement (910) du système informatique (900) à exécuter les étapes selon l'une quelconque des revendications 7 à 9.
